# FASCICULE DE BREVET EUROPEEN

(11) **EP 2 345 012 B1**
(45) Date de publication et mention de la délivrance du brevet: **16.10.2013**
(21) Numéro de dépôt: 09756007.2
(22) Date de dépôt: 12.10.2009
(51) Int. Cl.: G08B 13/196, H04N 5/232, H04N 7/18

(54) **PROCÉDÉ ET DISPOSITIF DE TÉLÉ-VISIONNAGE**
VERFAHREN UND EINRICHTUNG ZUR TELE-BETRACHTUNG
METHOD AND DEVICE FOR TELE-VIEWING

(30) Priorité: 13.10.2008 FR 0856932
(43) Date de publication de la demande: 20.07.2011
(73) Titulaire: Withings, 92130 Issy Les Moulineaux (FR)
(72) Inventeur: HUTCHINGS, Cédric, F-92130 Issy Les Moulineaux (FR)
(74) Mandataire: Cabinet Plasseraud
(86) Numéro de dépôt international: PCT/FR2009/051936
(87) Numéro de publication internationale: WO 2010/043805

(56) Documents cités:
- EP-A- 1 515 546
- GB-A- 2 252 473
- US-A1- 2006 256 202

## Description

La présente invention est relative aux procédés et dispositifs de télé-visionnage.

Plus particulièrement, l'invention concerne un procédé de télé-visionnage comprenant les étapes suivantes :
(a) une étape de connexion au cours de laquelle on fait communiquer à distance un dispositif de commande pourvu d'un écran, avec un appareil de prise de vue motorisé à champ de vision mobile disposé dans un lieu à visionner, ledit appareil de prise de vue étant adapté pour voir le lieu à visionner selon une pluralité de points de vue,
(b) une étape de commande au cours de laquelle on commande des déplacements de champ de vision dudit appareil de prise de vue pour obtenir un point de vue souhaité sur le lieu à visionner parmi ladite pluralité de points de vue,
(c) une étape de visualisation au cours de laquelle on visualise à distance le lieu à visionner selon le point de vue souhaité, sur l'écran du dispositif de commande.

Dans les procédés connus de ce type, l'appareil de prise de vue envoie en permanence des images du lieu à visionner au dispositif de commande, au fur et à mesure des déplacements du champ de vision de l'appareil de prise de vue. L'utilisateur commande ces déplacements en fonction de l'image qu'il voit sur l'écran, mais ces images ne lui arrivent souvent qu'avec retard du fait du temps de latence entre l'envoi d'une image par le dispositif de prise et l'arrivée complète de cette image sur le dispositif de commande : ce phénomène de latence rend difficile et fastidieuse la commande à distance du déplacement du champ de vision.

De plus, dans ces procédés connus, les erreurs de manipulation de l'utilisateur ou les changements de point de vue qu'il effectue avant d'arriver au point de vue souhaité, entraînent autant de déplacements de l'appareil de prise de vue caméra lorsque le changement de point de vue est obtenu grâce à une motorisation de cet appareil de prise de vue : il en résulte une usure inutile du mécanisme qui entraîne l'appareil de prise de vue et une consommation d'énergie inutile (ce dernier point est spécialement important lorsque le dispositif de prise de vue fonctionne sur batteries).

Un exemple de procédé connu du type susmentionné est décrit dans le document US-A-2006/256202. Dans ce procédé, un utilisateur peut pointer sur une image panoramique d'un endroit à surveiller, des zones dont l'utilisateur souhaite voir défiler séquentiellement des images. Une caméra est ensuite orientée successivement vers ces zones pour présenter successivement à l'écran, des images réelles de ces zones.

La présente invention a notamment pour but d'améliorer l'ergonomie d'un procédé du type susmentionné.

A cet effet, selon l'invention, l'étape de commande (b) susmentionnée comporte des sous-étapes comme définies dans la revendication 1.

Grâce à ces dispositions, l'utilisateur peut aisément naviguer localement dans l'image virtuelle du lieu à visionner, en s'affranchissant de tout temps de latence qui pourrait être dû à la transmission entre l'appareil de prise de vue et le dispositif de commande. Ce faisant, il peut se rendre compte immédiatement de l'image finale qui sera obtenue, et peut donc immédiatement régler au mieux le point de vue souhaité.

De plus, cette navigation n'entraîne aucun mouvement inutile du champ de vision de l'appareil de prise de vue, puisque ce champ de vision n'est modifié que lorsque l'utilisateur a validé le point de vue souhaité sur l'image virtuelle, donc lorsqu'il est sûr du point de vue souhaité. Il en résulte une économie d'énergie au niveau de l'appareil de prise de vue et une moindre usure de cet appareil.

Dans des modes de réalisation du procédé selon l'invention, on peut éventuellement avoir recours en outre à l'une et/ou à l'autre des dispositions suivantes :
- au cours de la sous-étape (b4), on enregistre des images intermédiaires du lieu à visionner selon des points de vue intermédiaires entre un point de vue initial et le point de vue souhaité pendant que le champ de vision de l'appareil de prise de vue est déplacé jusqu'au point de vue souhaité ;
- lesdites images intermédiaires sont utilisées pour mettre à jour lesdites données d'image virtuelle dans le dispositif de commande, lesdites données d'mage virtuelle étant ultérieurement utilisées pour créer localement, au niveau du dispositif de commande, une image virtuelle du lieu à visionner.

Par ailleurs, l'invention a également pour objet un dispositif de télé-visionnage comme défini dans la revendication 4.

Dans des modes de réalisation du dispositif selon l'invention, on peut éventuellement avoir recours en outre à l'une et/ou à l'autre des dispositions suivantes :
- l'appareil de prise de vue est une caméra numérique motorisée ;
- l'appareil de prise de vue fonctionne sur batterie ;
- l'appareil de prise de vue est adapté pour prendre des images intermédiaires du lieu à visionner selon des points de vue intermédiaires entre un point de vue initial et le point de vue souhaité pendant que le champ de vision de l'appareil de prise de vue est déplacé jusqu'au point de vue souhaité ;
- l'appareil de prise de vue est adapté pour transmettre lesdites images intermédiaires au dispositif de commande (éventuellement en temps différé) et ledit dispositif de commande est adapté pour utiliser lesdites images intermédiaires pour mettre à jour lesdites données d'image virtuelle.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue en perspective montrant un exemple de lieu pouvant être visionné à distance par le procédé selon l'invention,
- la figure 2 est une vue schématique montrant la configuration du lieu à visionner et le dispositif de télé-visionnage utilisé dans une forme de réalisation de l'invention,

- la figure 3 est un schéma bloc illustrant certains composants des appareils appartenant au dispositif de télé-visionnage de la figure 2,
- la figure 4 montre un exemple de menu de démarrage de l'application de télé-visionnage pouvant être présenté sur l'écran du dispositif de commande appartenant au dispositif des figures 2 et 3,
- la figure 5 montre un exemple d'affichage d'image virtuelle du lieu à visionner sur l'écran du dispositif de commande, permettant à un utilisateur de naviguer dans l'image virtuelle,
- la figure 6 est une vue similaire à la figure 5, illustrant la validation du point de vue souhaité par l'utilisateur, sur l'image virtuelle présentée à l'écran du dispositif de commande,
- et la figure 7 est une vue similaire à la figure 6, montrant l'affichage de l'image actuelle du lieu à visionner, selon le point de vue souhaité par l'utilisateur.

Sur les différentes figures, les mêmes références désignent des éléments identiques ou similaires.

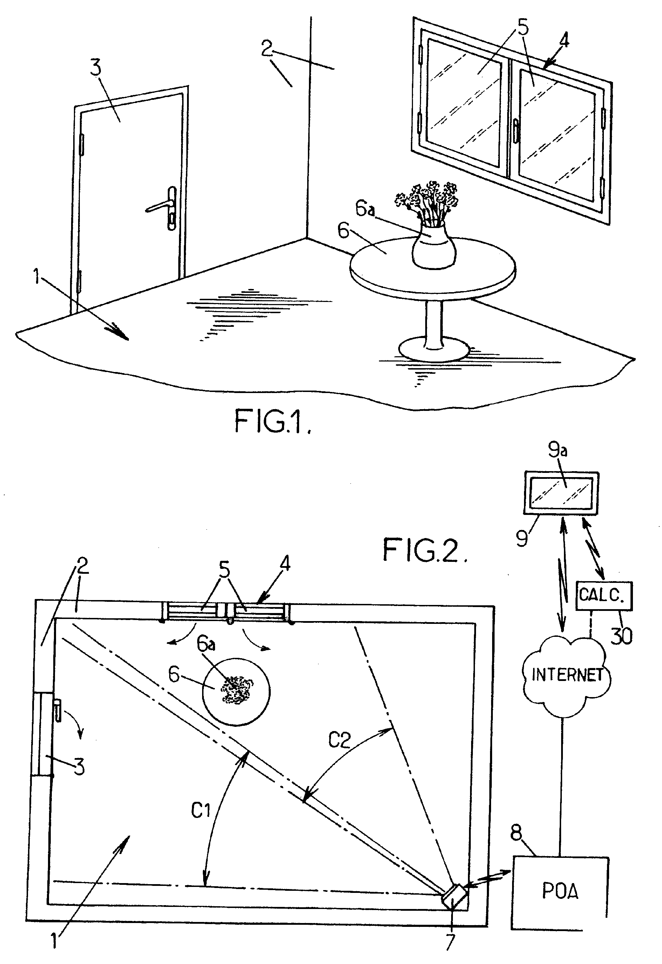

La figure 1 montre un lieu 1 pouvant être surveillé à distance selon le procédé de télé-visionnage de l'invention, par exemple aux fins de télésurveillance. Le lieu à visionner 1 peut comprendre par exemple une ou plusieurs pièces d'un bâtiment et dans l'exemple représenté sur la figure 1, cette pièce est délimitée par des murs 2 et comprend une porte d'accès 3, une fenêtre 4 dotée de battants 5 et du mobilier 6, 6a, par exemple une table 6 portant un vase 6a.

Comme représenté sur la figure 2, ce lieu peut être visionné à distance au moyen d'un ou plusieurs appareil(s) de prise de vue 7 à champ de vision mobile, par exemple une caméra numérique motorisée, montée pivotante selon un axe ou deux axes de rotation. Le champ de vision de la caméra numérique 7 peut être déplacé de façon sensiblement continue. A titre d'exemple, la figure 2 montre la position du champ de vision de la caméra numérique 7 selon un premier point de vue C1 où le champ de vision couvre la porte 3, et la position du champ de vision selon un deuxième point de vue C2 où ledit champ de vision couvre la fenêtre 4.

La caméra numérique fonctionne généralement sur batterie (pile jetable ou accumulateur rechargeable) mais pourrait le cas échéant fonctionner sur le réseau électrique.

Cette caméra numérique 7 (ou chaque caméra numérique 7 s'il y en a plusieurs) communique, par exemple par voie radio, avec un point d'accès Internet 8, par exemple un routeur WI-FI si la communication radio entre la caméra numérique 7 et le point d'accès 8 est réalisée en utilisant le protocole WI-FI. Le point d'accès 8 peut être relié par exemple au réseau téléphonique par voie filaire, de façon à accéder à l'Internet et communiquer ainsi avec un dispositif de commande 9 pourvu d'un écran 9a sur lequel un utilisateur peut visualiser des images (images fixes ou séquences vidéo) prises par la caméra numérique 7.

Le dispositif de commande 9 peut par exemple être un téléphone mobile, mais pourrait être le cas échéant un microordinateur portable ou non, ou autre. Le dispositif de commande 9 est connecté au réseau Internet par voie radio dans le cas présent, par exemple selon le protocole GPRS ou 3GPP (par exemple UMTS). On notera que, selon une variante possible, le dispositif de commande 9 pourrait communiquer avec le point d'accès 8, sans passer par l'Internet, mais en utilisant uniquement le réseau radio, en mode GPRS ou 3GPP (dans ce cas, le point d'accès 8 devrait bien entendu être pourvu de moyens de communication radio compatibles avec le protocole à utiliser).

Eventuellement, le point d'accès 8 peut également communiquer, par l'Internet, avec un centre de calcul distant 30 (CALC) qui peut communiquer lui-même avec le dispositif de commande 9 par Internet ou directement par voie radio.

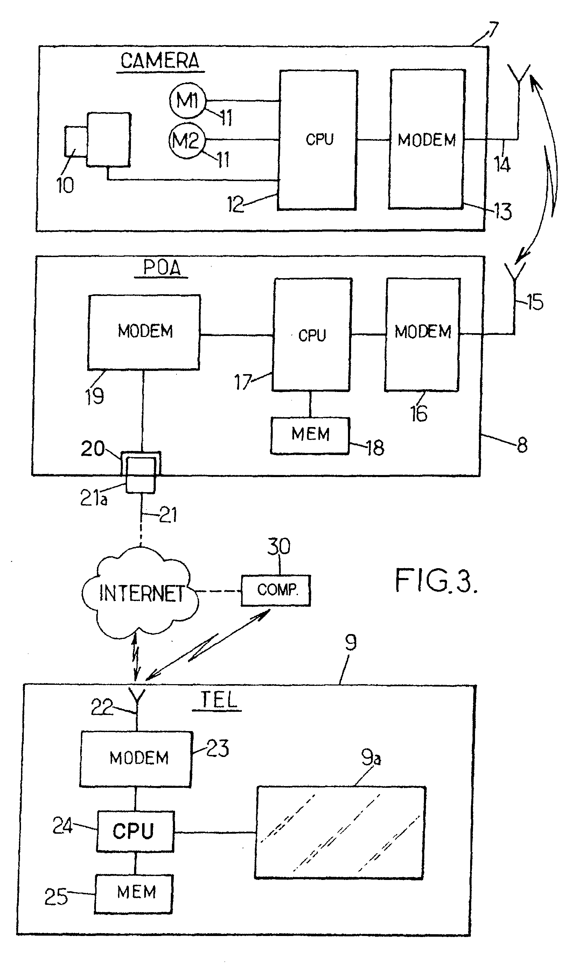

Comme représenté sur la figure 3, la caméra numérique 7 peut comporter par exemple une partie mobile 10 (comprenant au moins l'objectif et un capteur, par exemple CCD ou CMOS) montée pivotante par exemple sur deux axes de rotation et commandée par deux moteurs pas-à-pas 11 (M1, M2).

Les moteurs pas-à-pas 11 sont commandés par une unité centrale électronique 12 (UC) telle qu'un microprocesseur ou microcontrôleur, laquelle unité centrale reçoit également les images prises par la partie mobile 10 et peut les compresser et les coder selon tout format connu (par exemple au format JPEG s'il s'agit d'images fixes ou MPEG s'il s'agit de séquences vidéo, ou autres).

L'unité centrale 12 est également reliée à un modem 13, par exemple un modem WI-FI doté d'une antenne 14 qui permet à la caméra numérique 7 de communiquer avec le point d'accès Internet 8.

Le point d'accès Internet 8 est lui-même pourvu d'une antenne 15 reliée à un modem WI-FI 16, qui communique avec une unité centrale électronique 17 (UC) telle qu'un microprocesseur ou microcontrôleur. L'unité centrale 17 peut communiquer avec une mémoire externe 18 (MEM) permettant le cas échéant de stocker des images provenant de la caméra numérique 7 (images fixes ou séquences vidéo) et reçues de ladite caméra numérique 7 par voie radio. L'unité centrale 17 communique par ailleurs avec un autre modem 18, par exemple un modem ADSL, doté d'une prise de connexion 20 pouvant être reliée au connecteur 21a d'un câble 21 relié au réseau téléphonique pour accéder à l'Internet. On notera que le point d'accès Internet 8 pourrait éventuellement être un dispositif plus complexe comportant par exemple un microordinateur (non représenté) associé à un modem externe.

Le dispositif de commande 9 (TEL), qui peut notamment être un téléphone mobile comme déjà expliqué ci-dessus, peut comporter par exemple une antenne 22 reliée à un modem 23 pouvant communiquer avec l'extérieur par voie radio, par exemple en mode GPRS ou pour 3GPP, ce modem étant relié à une unité centrale électronique 24 (UC) telle qu'un microprocesseur ou un microcontrôleur doté d'une mémoire 25 (MEM) et relié à l'écran 9a susmentionné qui peut par exemple être un écran tactile dans la forme de réalisation considérée ici.

Lorsque l'utilisateur du dispositif de commande 9 souhaite visualiser à distance le lieu à visionner 1, soit de sa propre initiative, soit parce qu'il a reçu un message d'alarme provenant d'un système d'alarme (non représenté) équipant le lieu à visionner 1, ledit utilisateur lance une application de télé-visionnage sur le dispositif de commande 9.

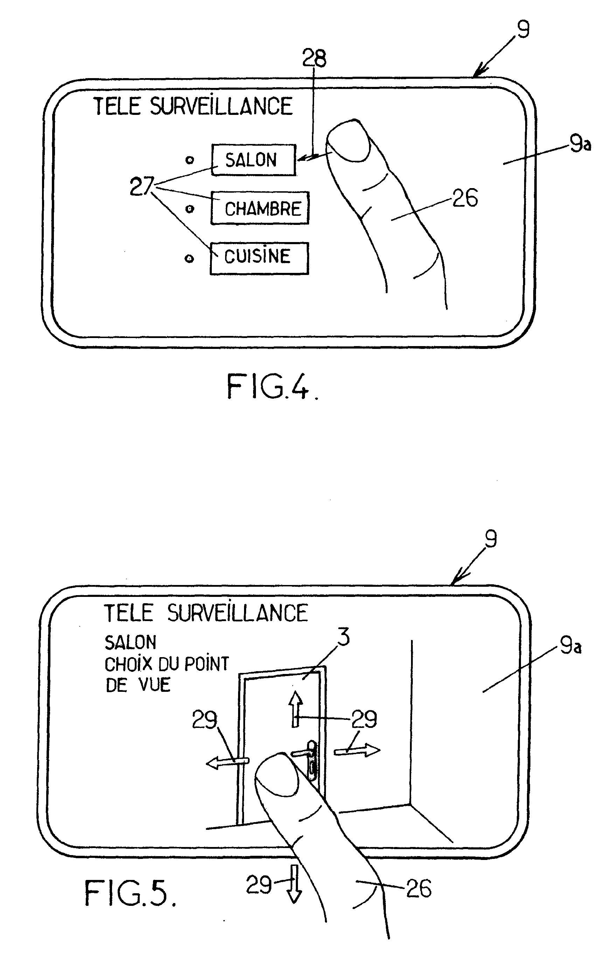

Cette application de télé-visionnage peut par exemple faire afficher l'écran représenté sur la figure 4, présentant un menu qui peut notamment comprendre des options correspondant aux différentes pièces du lieu à visionner 1 qui sont équipées de caméras numériques, en l'occurrence trois pièces constituées par un salon, une chambre et une cuisine équipées chacune d'une caméra numérique 7 qui communique avec le point d'accès Internet 8. Chacune de ces trois options du menu correspond à une zone tactile 28 de l'écran 9a. Pour choisir l'une de ces options, par exemple pour choisir le salon, l'utilisateur peut par exemple taper deux fois à bref intervalle sur la zone tactile 27 correspondante avec l'extrémité d'un de ses doigts 26, comme schématisé par la flèche 28 sur la figure 4.

Comme représenté sur la figure 5, le dispositif de commande 9 fait alors apparaître sur l'écran 9a une image virtuelle du lieu à visionner 1, cette image virtuelle étant, dans l'exemple considéré, prise selon le point de vue C1 susmentionné.

Le point de vue présenté initialement pour l'image virtuelle peut par exemple être le dernier point de vue choisi par un utilisateur pour visionner une image réelle du lieu à visionner 1, ou bien il peut s'agir d'un point de vue prédéterminé, toujours le même.

L'image virtuelle présentée par le dispositif de commande 9 est créée localement par ce dispositif de commande, à partir de données d'images virtuelles contenues dans sa mémoire 25. Les données d'images virtuelles en question peuvent consister par exemple en un fichier VRML ("Virtual Reality Markup Language") constitué à partir d'images anciennes précédemment prises par la caméra numérique 7 et assemblées pour former une image panoramique du lieu à visionner 1. Plus précisément, cette image panoramique peut être une projection équirectangulaire homogène du lieu à visionner 1, vu depuis l'emplacement de la caméra numérique 7, cette projection pouvant être enrichie de métadonnées telles que des données de correspondance entre des points de l'image et la position de la caméra numérique 7, des horodatages, des images constituant cette projection, etc.).

Cette projection équirectangulaire est calculée une première fois lors de l'installation de la caméra numérique 7, à qui on fait prendre des images du lieu à visionner 1 sous tous les points de vue possibles, ces images étant ensuite assemblées pour constituer l'image panoramique susmentionnée. L'assemblage desdites images peut être réalisé par exemple par le centre de calcul distant 30 susmentionné, mais pourrait éventuellement être réalisé directement soit par le dispositif de commande 9, soit par le point d'accès 8 s'ils ont une capacité de calcul suffisante.

Par ailleurs, l'image panoramique susmentionnée est mise à jour morceau par morceau au fur et à mesure que de nouvelles images du lieu à visionner 1 sont transmises par la caméra numérique 7.

Au moment où l'utilisateur visualise l'image virtuelle représentée sur la figure 5, cette image correspond à une partie de l'image panoramique susmentionnée, réalisée à partir d'images anciennes, de sorte qu'il s'agit bien d'une image virtuelle du lieu à visionner 1 et non d'une image en temps réel. A ce stade, la caméra numérique 7 n'est d'ailleurs pas nécessairement activée et ne transmet pas d'image vers le dispositif de commande 9.

Comme représenté sur la figure 5, l'utilisateur du dispositif de commande 9 peut naviguer dans l'image panoramique, par exemple en faisant glisser l'extrémité de son doigt 26 sur l'écran tactile 9a, comme symbolisé par les flèches 29. Ce glissement du doigt 26 de l'utilisateur détermine un changement de point de vue dans l'image panoramique, et l'image virtuelle présentée sur l'écran 9a est modifiée en conséquence, comme cela se pratique de façon courante dans la visualisation d'images tridimensionnelles.

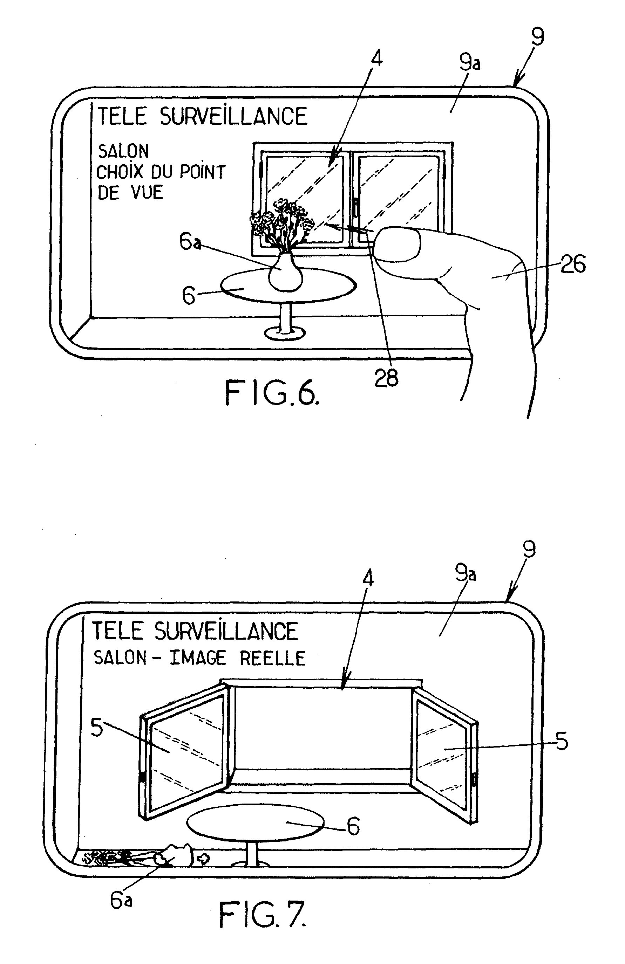

Comme représenté sur la figure 6, lorsque l'utilisateur a atteint le point de vue selon lequel il souhaite visualiser le lieu à visionner 1 (ici un point de vue sur la fenêtre 4), il valide ce point de vue par exemple en tapant deux fois à bref intervalle sur l'écran tactile 9a avec l'extrémité de son doigt 26.

Le dispositif de commande 9 envoie alors une commande à la caméra numérique 7, par l'intermédiaire de l'Internet et du point d'accès 8, pour d'une part activer ladite caméra numérique 7, et d'autre part, faire déplacer son champ de vision depuis son point de vue initial (dernière position où la partie mobile de la caméra numérique 7 était arrêtée, correspondant au point de vue C1 dans l'exemple considéré ici), jusqu'au point de vue souhaité C2, qui dans l'exemple considéré englobe la fenêtre 4.

La caméra numérique 7 s'oriente alors selon le point de vue souhaité, et envoie l'image actuelle du lieu à visionner 1 selon ce point de vue, comme représenté sur la figure 7. Dans l'exemple particulier de la figure 7, cette image actuelle est différente de l'image virtuelle précédemment visible sur l'écran 9a (figure 6) puisque l'image actuelle montre que la fenêtre 4 a été ouverte et le vase 6a qui se trouvait initialement sur la table 6, est tombé à terre, par exemple suite à une intrusion dans le lieu à visionner 1.

On notera qu'au cours du déplacement de la caméra numérique 7 entre le point de vue initial C1 et le point de vue souhaité C2, cette caméra numérique peut avantageusement prendre des images intermédiaires et les envoyer, soit en temps réel, soit en temps différé, au centre de calcul distant 30, qui peut utiliser ces images pour mettre à jour partiellement l'image panoramique du lieu à visionner 1, puis retransmettre cette image panoramique au dispositif de commande 9, par exemple en temps différé.

Le cas échéant, l'image panoramique du lieu à visionner 1 peut également être réinitialisée de temps à autre en refaisant prendre des images du lieu à visionner 1 sous tous les angles par la caméra numérique 7, par exemple lorsque la caméra numérique 7 n'a pas été activée par l'utilisateur depuis un temps prédéterminé (par exemple au bout d'une semaine d'inactivité, ou autre).

## Revendications

1. Procédé de télé-visionnage comprenant les étapes suivantes :
a) une étape de connexion au cours de laquelle on fait communiquer à distance un dispositif de commande (9) pourvu d'un écran (9a), avec un appareil de prise de vue motorisé (7) à champ de vision mobile disposé dans un lieu à visionner (1), ledit appareil de prise de vue étant adapté pour voir le lieu à visionner selon une pluralité de points de vue (C1, C2),
b) une étape de commande au cours de laquelle on commande des déplacements de champ de vision dudit appareil de prise de vue (7) pour obtenir un point de vue souhaité (C2) sur le lieu à visionner (1) parmi ladite pluralité de points de vue,
c) une étape de visualisation au cours de laquelle on visualise à distance le lieu à visionner (1) selon le point de vue souhaité (C2), sur l'écran (9a) du dispositif de commande (9),
l'étape de commande (b) comportant les sous-étapes suivantes :
b1) on présente sur l'écran (9a) du dispositif de commande (9), une image virtuelle de départ qui est une sous-image d'une image virtuelle panoramique du lieu à visionner (1), l'image virtuelle de départ étant vue selon un premier point de vue (C1) parmi ladite pluralité de points de vue, ladite image virtuelle panoramique étant obtenue à partir de données d'image virtuelle précédemment mémorisées dans le dispositif de commande (9) à partir d'images anciennes dudit lieu à visionner (1),
b2) on navigue dans ladite image virtuelle panoramique en modifiant le point de vue de l'image virtuelle panoramique parmi ladite pluralité de points de vue, jusqu'à obtenir le point de vue souhaité (C2),
b3) on valide le point de vue souhaité (C2),
b4) on fait déplacer une partie (10) du dispositif de prise de vue (7) pour placer le champ de vision du dispositif de prise de vue (7) selon le point de vue souhaité (C2) et on lui fait prendre au moins une image actuelle du lieu à visionner (1) selon ledit point de vue souhaité (C2),
b5) on transmet ladite image actuelle au dispositif de commande (9) et on l'affiche sur l'écran (9a) du dispositif de commande.

2. Procédé selon la revendication 1, dans lequel au cours de la sous-étape b4), on enregistre des images intermédiaires du lieu à visionner (1) selon des points de vue intermédiaires entre un point de vue initial (C1) et le point de vue souhaité (C2) pendant que le champ de vision de l'appareil de prise de vue (7) est déplacé jusqu'au point de vue souhaité (C2).

3. Procédé selon la revendication 2, dans lequel lesdites images intermédiaires sont utilisées pour mettre à jour lesdites données d'image virtuelle dans le dispositif de commande (9), lesdites données d'image virtuelle étant ultérieurement utilisées pour créer localement, au niveau du dispositif de commande (9), une image virtuelle panoramique du lieu à visionner.

4. Dispositif de télé-visionnage pour la mise en oeuvre d'un procédé selon l'une quelconque des revendications précédentes, comprenant :
- un appareil de prise de vue motorisé (7) à champ de vision mobile adapté pour être disposé dans un lieu à visionner (1), ledit appareil de prise de vue étant adapté pour voir le lieu à visionner selon une pluralité de points de vue (C1, C2),
- un dispositif de commande (9) pourvu d'un écran (9a),
- des moyens de liaison (13-16, 19-23) adaptés pour faire communiquer à distance ledit appareil de prise de vue (7) avec ledit un dispositif de commande (9), le dispositif de commande (9) étant pourvu d'une interface utilisateur (9a) permettant à un utilisateur de commander des déplacements de champ de vision dudit appareil de prise de vue (7) pour obtenir un point de vue souhaité (C2) sur le lieu à visionner (1) parmi ladite pluralité de points de vue, et l'écran (9a) du dispositif de commande (9) étant adapté pour visualiser à distance le lieu à visionner (1) selon le point de vue souhaité (C2),
le dispositif de commande (9) étant adapté pour présenter sur l'écran (9a), une image virtuelle de départ qui est une sous-image d'un image virtuelle panoramique du lieu à visionner (1), ladite image virtuelle de départ étant vue selon un premier point de vue (C1) parmi ladite pluralité de points de vue, ladite image virtuelle panoramique étant obtenue à partir de données d'image virtuelle précédemment mémorisées dans le dispositif de commande (9) à partir d'images anciennes dudit lieu à visionner,
ladite interface utilisateur (9a) étant adaptée pour permettre à un utilisateur de naviguer dans ladite image virtuelle panoramique en modifiant le point de vue de l'image virtuelle panoramique parmi ladite pluralité de points de vue jusqu'à obtenir le point de vue souhaité (C2), et pour valider le point de vue souhaité,
ledit dispositif de commande (9) étant adapté pour transmettre à l'appareil de prise de vue (7) une commande pour faire déplacer une partie (10) du dispositif de prise de vue (7) pour placer le champ de vision du dispositif de prise de vue selon le point de vue souhaité (C2) et pour lui faire prendre au moins une image actuelle du lieu à visionner selon ledit point de vue souhaité (C2),
et ledit dispositif de commande (9) étant adapté pour recevoir ladite image actuelle par lesdits moyens de liaison (13-16, 19-23) et pour l'afficher sur l'écran (9a).

5. Dispositif selon la revendication 4, dans lequel l'appareil de prise de vue (7) est une caméra numérique motorisée.

6. Dispositif selon la revendication 4 ou la revendication 5, dans lequel l'appareil de prise de vue (7) fonctionne sur batterie.

7. Dispositif selon l'une quelconque des revendications 4 à 6, dans lequel l'appareil de prise de vue (7) est adapté pour prendre des images intermédiaires du lieu à visionner selon des points de vue intermédiaires entre un point de vue initial (C1) et le point de vue souhaité (C2) pendant que le champ de vision de l'appareil de prise de vue (7) est déplacé jusqu'au point de vue souhaité (C2).

8. Dispositif selon la revendication 7, dans lequel l'appareil de prise de vue (7) est adapté pour transmettre lesdites images intermédiaires au dispositif de commande (9) et ledit dispositif de commande est adapté pour utiliser lesdites images intermédiaires pour mettre à jour lesdites données d'image virtuelle.

## Patentansprüche

1. Verfahren zur Fern-Betrachtung, umfassend die folgenden Schritte:
a) einen Verbindungsschritt, bei dem bewirkt wird, dass eine mit einem Bildschirm (9a) versehene Bedienungseinrichtung (9) über eine Entfernung mit einem motorisierten Bildaufnahmegerät (7) mit einem mobilen Sichtfeld kommuniziert, das in einem zu betrachtenden Ort (1), angeordnet ist, wobei das Bildaufnahmegerät angepasst ist, um den zu betrachtenden Ort gemäß einer Mehrzahl von Ansichten (C1, C2) zu betrachten,
b) einen Anweisungsschritt, bei dem Anweisungen für Verlagerungen des Sichtfeldes von dem Bildaufnahmegerät (7) gegeben werden, um eine gewünschte Ansicht (C2) auf dem zu betrachtenden Ort (1) unter der Mehrzahl von Ansichten zu erhalten,
c) einen Visualisierungsschritt, bei dem aus der Entfernung der zu betrachtende Ort (1) gemäß der gewünschten Ansicht (C2) auf dem Bildschirm (9a) der Bedienungseinrichtung (9) visualisiert wird,
wobei der Anweisungsschritt (b) die folgenden Unterschritte umfasst:
b1) auf dem Bildschirm (9a) der Bedienungseinrichtung (9) wird ein virtuelles Ausgangsbild gezeigt, welches ein Ausschnitt von einem virtuellen Panorama-Bild von dem zu betrachtenden Ort (1) ist, wobei das virtuelle Ausgangsbild gemäß einer ersten Ansicht (C1) unter der Mehrzahl von Ansichten betrachtet wird, wobei das virtuelle Panorama-Bild ausgehend von Daten eines virtuellen Bildes erhalten wird, die zuvor in der Bedienungseinrichtung (9) gespeichert wurden, ausgehend von alten Bildern von dem zu betrachtenden Ort (1),
b2) in dem virtuellen Panorama-Bild wird navigiert, indem die Ansicht von dem virtuellen Panorama-Bild unter der Mehrzahl von Ansichten modifiziert wird, bis die gewünschte Ansicht (C2) erhalten wird,
b3) die gewünschte Ansicht (C2) wird validiert,
b4) es wird bewirkt, dass ein Teil (10) von dem Bildaufnahmegerät (7) verlagert wird, um das Sichtfeld des Bildaufnahmegeräts (7) gemäß der gewünschten Ansicht (C2) zu positionieren, und es wird bewirkt, dass dieses wenigstens ein aktuelles Bild von dem zu betrachtenden Ort (1) gemäß der gewünschten Ansicht (C2) aufnimmt,
b5) das aktuelle Bild wird zu der Bedienungseinrichtung (9) übertragen, und es wird auf dem Bildschirm (9a) der Bedienungseinrichtung angezeigt.

2. Verfahren nach Anspruch 1, wobei bei dem Unterschritt b4) Zwischen-Bilder von dem zu betrachtenden Ort (1) ausgehend von Zwischen-Ansichten zwischen einer anfänglichen Ansicht (C1) und der gewünschten Ansicht (C2) aufgezeichnet werden, während das Sichtfeld von dem Bildaufnahmegerät (7) bis zu der gewünschten Ansicht (C2) verlagert wird.

3. Verfahren nach Anspruch 2, wobei die Zwischen-Bilder verwendet werden, um die Daten des virtuellen Bildes in der Bedienungseinrichtung (9) zu aktualisieren, wobei die Daten des virtuellen Bildes anschließend verwendet werden, um lokal, auf dem Niveau der Bedienungseinrichtung (9), ein virtuelles Panorama-Bild von dem zu betrachtenden Ort zu erzeugen.

4. Einrichtung zur Fern-Betrachtung, um ein Verfahren nach einem der vorhergehenden Ansprüche umzusetzen, umfassend:
- ein motorisiertes Bildaufnahmegerät (7) mit mobilem Sichtfeld, das angepasst ist, um in einem zu betrachtenden Ort (1) angeordnet zu werden, wobei das Bildaufnahmegerät dazu angepasst ist, um den zu betrachtenden Ort gemäß einer Mehrzahl von Ansichten (C1, C2) zu betrachten,
- eine Bedienungseinrichtung (9), die mit einem Bildschirm (9a) ausgestattet ist,
- Verbindungsmittel (13-16, 19-23), die angepasst sind, um das Bildaufnahmegerät (7) mit der Bedienungseinrichtung (9) über eine Entfernung hinweg kommunizieren zu lassen,
wobei die Bedienungseinrichtung (9) mit einer Benutzerschnittstelle (9a) ausgestattet ist, welche es einem Benutzer ermöglicht, Anweisungen für Verlagerungen von dem Sichtfeld des Bildaufnahmegeräts (7) zu geben, um eine gewünschte Ansicht (C2) auf den zu betrachtenden Ort (1) unter der Mehrzahl von Ansichten zu erhalten, und wobei der Bildschirm (9a) der Bedienungseinrichtung (9) angepasst ist, um über die Entfernung hinweg den zu betrachtenden Ort (1) gemäß der gewünschten Ansicht (C2) zu visualisieren,
wobei die Bedienungseinrichtung (9) angepasst ist, um auf dem Bildschirm (9a) ein virtuelles Ausgangsbild zu zeigen, das ein Ausschnitt von einem virtuellen Panorama-Bild des zu betrachtenden Ortes (1) ist, wobei das virtuelle Ausgangsbild gemäß einer ersten Ansicht (C1) unter der Mehrzahl von Ansichten gesehen wird, wobei das virtuelle Panorama-Bild ausgehend von zuvor in der Bedienungseinrichtung (9) gespeicherten Daten eines virtuellen Bildes erhalten wird, ausgehend von alten Bildern von dem zu betrachtenden Ort.
wobei die Benutzerschnittstelle (9a) angepasst ist, um einem Benutzer zu ermöglichen, in dem virtuellen Panorama-Bild zu navigieren, wobei die Ansicht des virtuellen Panorama-Bildes unter der Mehrzahl von Ansichten modifiziert wird, bis die gewünschte Ansicht (C2) erhalten wird,
und um die gewünschte Ansicht zu validieren,
wobei die Bedienungseinrichtung (9) angepasst ist, um an das Bildaufnahmegerät (7) eine Anweisung zu übertragen, um zu bewirken, dass ein Teil (10) des Bildaufnahmegeräts (7) verlagert wird, um das Sichtfeld des Bildaufnahmegeräts gemäß der gewünschten Ansicht (C2) zu positionieren, und um dieses wenigstens ein aktuelles Bild von dem zu betrachtenden Ort gemäß der gewünschten Ansicht (C2) aufnehmen zu lassen,
und wobei die Bedienungseinrichtung (9) ausgebildet ist, um das aktuelle Bild über die Verbindungsmittel (13-16, 19-23) zu empfangen, und um dieses auf dem Bildschirm (9a) anzuzeigen.

5. Einrichtung nach Anspruch 4, wobei das Bildaufnahmegerät (7) eine motorisierte Digitalkamera ist.

6. Einrichtung nach Anspruch 4 oder 5, wobei das Bildaufnahmegerät (7) mit einer Batterie arbeitet.

7. Einrichtung nach einem der Ansprüche 4 bis 6, wobei das Bildaufnahmegerät (7) angepasst ist, um Zwischen-Bilder von dem zu betrachtenden Ort aufzunehmen, gemäß Zwischen-Ansichten zwischen einer anfänglichen Ansicht (C1) und der gewünschten Ansicht (C2), während das Sichtfeld des Bildaufnahmegeräts (7) bis zu der gewünschten Ansicht (C2) verlagert wird.

8. Einrichtung nach Anspruch 7, wobei das Bildaufnahmegerät (7) angepasst ist, um die Zwischen-Bilder zu der Bedienungseinrichtung (9) zu übertragen, und die Bedienungseinrichtung angepasst ist, um die Zwischen-Bilder zu verwenden, um die Daten des virtuellen Bilds zu aktualisieren.

## Claims

1. A tele-viewing method comprising the following steps:
a) a connection step during which a control device (9) provided with a screen (9a) is made to remotely communicate with a motor-driven camera appliance (7) with mobile field of view arranged in a place to be viewed (1), said camera appliance being suitable for seeing the place to be viewed from a plurality of viewpoints (C1, C2),
b) a control step during which the field of view movements of said camera appliance (7) are controlled to obtain a desired viewpoint (C2) over the place to be viewed (1) out of said plurality of viewpoints,
c) a display step during which the place to be viewed (1) is remotely displayed from the desired viewpoint (C2), on the screen (9a) of the control device (9),
the control step (b) comprising the following substeps:
b1) a starting virtual image, which is a sub-image of a panoramic virtual image of the place to be viewed (1) is presented on the screen (9a) of the control device (9), the starting virtual image being seen from a first viewpoint (C1) out of said plurality of viewpoints, said panoramic virtual image being obtained from virtual image data previously stored in the control device (9) on the basis of old images of said place to be viewed (1),
b2) navigation in said panoramic virtual image is obtained by modifying the viewpoint of the panoramic virtual image out of said plurality of viewpoints, until the desired viewpoint (C2) is obtained,
b3) the desired viewpoint (C2) is confirmed,
b4) a part (10) of the camera device (7) is moved to place the field of view of the camera device (7) according to the desired viewpoint (C2) and it is made to take at least one current image of the place to be viewed (1) from said desired viewpoint (C2),
b5) said current image is transmitted to the control device (9) and it is displayed on the screen (9a) of the control device.

2. The method as claimed in claim 1, in which, during the substep b4), intermediate images of the place to be viewed (1) from intermediate viewpoints between an initial viewpoint (C1) and the desired viewpoint (C2) are stored while the field of view of the camera appliance (7) is moved to the desired viewpoint (C2).

3. The method as claimed in claim 2, in which said intermediate images are used to update said virtual image data in the control device (9), said virtual image data being subsequently used to create locally, on the control device (9), a panoramic virtual image of the place to be viewed.

4. A tele-viewing device for implementing a method as claimed in any one of the preceding claims, comprising:
- a motor-driven camera appliance (7) with mobile field of view designed to be arranged in a place to be viewed (1), said camera appliance being suitable for seeing the place to be viewed from a plurality of viewpoints (C1, C2),
- a control device (9) provided with a screen (9a),
- link means (13-16, 19-23) suitable for having said camera appliance (7) communicate remotely with said one control device (9).
the control device (9) being provided with a user interface (9a) enabling a user to control movements of the field of view of said camera appliance (7) to obtain a desired viewpoint (C2) over the place to be viewed (1) out of said plurality of viewpoints, and the screen (9a) of the control device (9) being suitable for remotely displaying the place to be viewed (1) from the desired viewpoint (C2),
the control device (9) being designed to present on the screen (9a) a starting virtual image, which is a sub-image of a panoramic virtual image of the place to be viewed (1), said starting virtual image being seen from a first viewpoint (C1) out of said plurality of viewpoints, said panoramic virtual image being obtained from virtual image data previously stored in the control device (9) from old images of said place to be viewed,
said user interface (9a) being designed to enable a user to navigate in said panoramic virtual image by modifying the viewpoint of the panoramic virtual image out of said plurality of viewpoints until the desired viewpoint (C2) is obtained, and to confirm the desired viewpoint,
said control device (9) being designed to transmit to the camera appliance (7) a command to make a part (10) of the camera device (7) move to place the field of view of the camera device according to the desired viewpoint (C2) and to make it take at least one current image of the place to be viewed from said desired viewpoint (C2),
and said control device (9) being designed to receive said current image via said link means (13-16, 19-23) and to display it on the screen (9a).

5. The device as claimed in claim 4, in which the camera appliance (7) is a motor-driven digital camera.

6. The device as claimed in claim 4 or claim 5, in which the camera appliance (7) operates on a battery.

7. The device as claimed in any one of claims 4 to 6, in which the camera appliance (7) is designed to take intermediate images of the place to be viewed from intermediate viewpoints between an initial viewpoint (C1) and the desired viewpoint (C2) while the field of view of the camera appliance (7) is moved to the desired viewpoint (C2).

8. The device as claimed in claim 7, in which the camera appliance (7) is designed to transmit said intermediate images to the control device (9) and said control device is designed to use said intermediate images to update said virtual image data.
